# EUROPEAN PATENT SPECIFICATION

(11) **EP 4 474 744 B1**
(45) Date of publication and mention of the grant of the patent: **11.02.2026**
(21) Application number: 24180321.2
(22) Date of filing: 05.06.2024
(51) Int. Cl.: F28B 1/00

(54) **A VECTOR CANCELLING COMPRESSOR DEVICE AND A METHOD THEREOF**
KOMPRESSORVORRICHTUNG MIT VEKTORUNTERDRÜCKUNG UND VERFAHREN DAFÜR
DISPOSITIF COMPRESSEUR À ANNULATION DE VECTEUR ET PROCÉDÉ ASSOCIÉ

(30) Priority: 06.06.2023 GB 202308432
(43) Date of publication of application: 11.12.2024
(73) Proprietor: Entropy Engines Limited, Watford Hertforshire WD25 9XX (GB)
(72) Inventor: BUDHDEO, Shamir, Watford, WD25 9XX (GB)
(74) Representative: Valet Patent Services Limited

(56) References cited:
- GB-A- 191 414 793
- GB-A- 308 966

## Description

### FIELD OF THE INVENTION

The present invention relates to a vector cancelling compressor device and a method thereof.

### BACKGROUND OF THE INVENTION

Condensers are widely used in heat transfer and have varying degrees of efficiency. There are many types of condensers but they all work to encourage phase change of a coolant from gaseous form back to liquid and the removal of heat energy. A standard type of condenser is known for instance from GB 308 966.

A compressor works by compressing air/gas. This in turn causes the temperature of the gas/air to increase. The mechanism of action is that the reduction in volume occasioned by the compressor, results in more collisions of the gas/air molecules and the walls on the compressor. The mechanical energy of the compression is transferred into the gas/air. The hotter gas with a higher thermal gradient is normally passed through a radiative element and the heat of the gas is removed, often by a fan or passively in the case of fridges. The loss of heat allow the gas/air to condense into liquid.

Condensation can also happen through compression. If a gaseous substance is placed under sufficient pressure it will condense and change phase. This is the result of increase in collisions of molecules and increase in collisions with the condenser wall. Energy within the system is lost and the gas condenses in the absence of further energy input. This does require the removal of heat energy from the compressed gas. In this present invention, the heat energy removed is reused in other systems from increasing the exit temperature of the compressed gas to create thrust or within low pressure turbines.

In all instances, the increase in inter-molecular collisions and molecular collisions with the wall of the condenser causes condensation via heat loss to the external environment.

Thus, there remains a need for alternative condenser, wherein, the a non mechanical condenser is used to increase efficiency of compression/condensation and the heat energy removed is reused in other systemsThis inclues increasing the exit temperature of the compressed gas to create thrust or within low pressure turbines, while remaining economical, efficient, easy to handle and convenient to use.

### OBJECTS

Some of the objects of the present disclosure, which at least one embodiment herein satisfies, are as follows:
An object of the present disclosure is to ameliorate one or more problems of the prior art or to at least provide a useful alternative.
Another object of the present disclosure is to provide a VEctor Cancelling Condenser (VECC).
Yet another object of the present disclosure is to provide a vector cancelling condensation method.
Other objects and advantages of the present disclosure will be more apparent from the following description, which is not intended to limit the scope of the present disclosure.

### SUMMARY OF THE DISCLOSURE

In an aspect, the present invention discloses a vector cancelling condenser device. The device comprises a body and at least one pair of delivery tubes. The body is defined by at least one wall and an enclosed space. The pair of delivery tubes are having a pair of gas outlets in the body. The pair of gas outlets are facing each other and configured to cancel the velocity of gas coming out from the gas outlets to forms saturated vapor of the gas and condensed liquid formed by releasing latent heat of condensation from the saturated vapors.

In an embodiment, the vector cancelling condenser device further may comprises at least one heat extracting coil and a liquid collector. The heat extracting coil is provided in the body and the heat extracting coil is configured to extract the latent heat of condensation released from the condensation of saturated vapors. The liquid collector configured to collect the condensed liquid.

In another embodiment, the vector cancelling condenser device further comprises at least one heat extracting jacket. The heat extracting jacket provided in the body. The heat extracting jacket is configured to extract the latent heat of condensation released from the condensation of saturated vapors.

The shape of the body is selected from sphere, cylinder, cube, cuboid, hexagonal cylinder, polygonal cylinder. In a preferred embodiment, the shape of the body is spherical.

In another aspect, the present disclosure provides a vector cancelling condensing method. In the first step of the method, a high pressure gas is supplied to a plurality of delivery tubes having a pair of gas outlets facing each other. In the second step of the method, the velocity vector of gas coming out from the gas outlets is being cancelled and converts the gas into saturated vapors. In third step of the method, the saturated vapors are partially condensed into a liquid. In fourth step of the method, the latent heat of condensation released from the partial condensation of the saturated vapors into liquid is extracted by the heat extracting coils or jacket. In fifth and final step of the method, the condensed liquid is collected in the liquid collector.

### BRIEF DESCRIPTION OF THE DRAWINGS

**FIG. 1** is a cross sectional view of one embodiment of vector cancelling condenser device having one pair of delivery tubes constructed in accordance with the present invention.
**FIG. 2** is a cross sectional view of one embodiment of vector cancelling condenser device having five pairs of delivery tubes constructed in accordance with the present invention.

### LIST OF REFERENCE NUMERAL

| | | |
|---|---|---|
| 100 | : | Vector Cancelling Condenser (VECC) device |
| 102 | : | Body |
| 104 | : | Wall |
| 106 | : | Enclosed space |
| 108a, 108b | : | Delivery Tubes |
| 110a, 110b | : | Gas outlets |
| 112 | : | Heat Extracting coils |
| 114 | : | Liquid Collector |

### DETAILED DESCRIPTION

Embodiments are provided so as to thoroughly and fully convey the scope of the present disclosure to the person skilled in the art. Numerous details are set forth, relating to specific components, and methods, to provide a complete understanding of embodiments of the present disclosure. It will be apparent to the person skilled in the art that the details provided in the embodiments should not be construed to limit the scope of the present disclosure. In some embodiments, well-known processes, well-known apparatus structures, and well-known techniques are not described in detail.

The terminology used in the present disclosure is only for the purpose of explaining a particular embodiment and such terminology shall not be considered to limit the scope of the present disclosure. As used in the present disclosure, the forms "a," "an," and "the" may be intended to include the plural forms as well, unless the context clearly suggests otherwise. The terms "comprises," "comprising," "including," and "having," are open-ended transitional phrases and therefore specify the presence of stated features, integers, steps, operations, elements, modules, units and/or components, but do not forbid the presence or addition of one or more other features, integers, steps, operations, elements, components, and/or groups thereof. The particular order of steps disclosed in the method and process of the present disclosure is not to be construed as necessarily requiring their performance as described or illustrated. It is also to be understood that additional or alternative steps may be employed.

The terms first, second, third, etc., should not be construed to limit the scope of the present disclosure as the aforementioned terms may be only used to distinguish one element, component, region, layer or section from another component, region, layer or section. Terms such as first, second, third, etc., when used herein do not imply a specific sequence or order unless clearly suggested by the present disclosure.

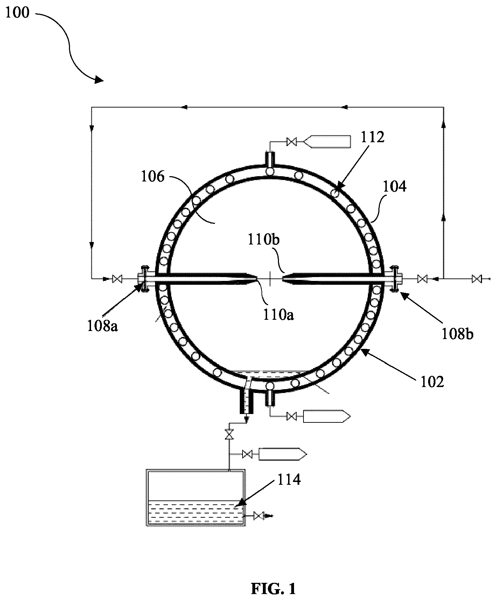

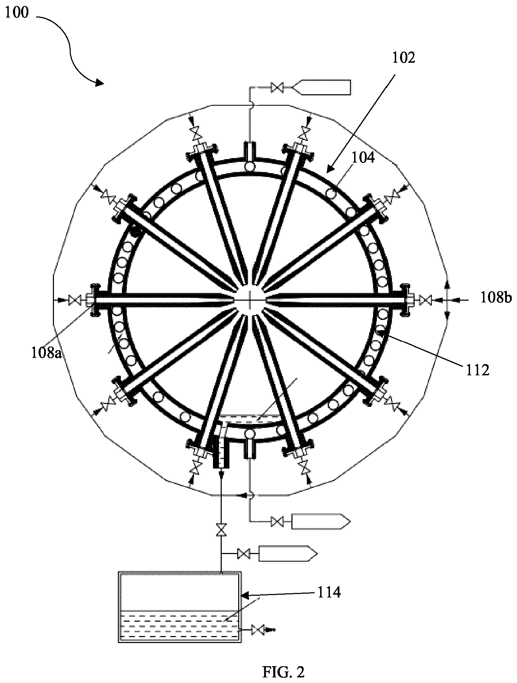

In an aspect as shown in FIG. 1 and FIG. 2, the present invention discloses a vector cancelling condenser device. The device comprises a body (102) and at least one pair of delivery tubes (108a, 108b). The body (102) is defined by at least one wall (104) and an enclosed space (106). The pair of delivery tubes (108a, 108b) are having a pair of gas outlets (110a, 110b) in the body (102). The pair of gas outlets (110a, 110b) are facing each other and configured to cancel the velocity of gas coming out from the gas outlets (110a, 110b) to forms saturated vapor of the gas and condensed liquid formed by releasing latent heat of condensation from the saturated vapors.

In an embodiment, the vector cancelling condenser device (100) further may comprises at least one heat extracting coil (112) and a liquid collector (114). The heat extracting coil (112) is provided in the body (102) and the heat extracting coil (112) is configured to extract the latent heat of condensation released from the condensation of saturated vapors. The liquid collector (114) configured to collect the condensed liquid.

In another embodiment, the vector cancelling condenser device (100) further comprises at least one heat extracting jacket. The heat extracting jacket provided in the body (102). The heat extracting jacket is configured to extract the latent heat of condensation released from the condensation of saturated vapors.

The shape of the body (102) is selected from sphere, cylinder, cube, cuboid, hexagonal cylinder, polygonal cylinder. In a preferred embodiment, the shape of the body (102) is spherical.

In another aspect, the present disclosure provides a vector cancelling condensing method. In the first step of the method, a high pressure gas is supplied to a plurality of delivery tubes having a pair of gas outlets (110a, 110b) facing each other. In the second step of the method, the velocity vector of gas coming out from the gas outlets is being cancelled and converts the gas into saturated vapors. In third step of the method, the saturated vapors are partially condensed into a liquid. In fourth step of the method, the latent heat of condensation released from the partial condensation of the saturated vapors into liquid is extracted by the heat extracting coils or jacket. In fifth and final step of the method, the condensed liquid is collected in the liquid collector.

### TECHNICAL ADVANCEMENTS

The present disclosure described hereinabove has several technical advantages including, but not limited to, a vector cancelling condenser device.

VEctor Cancelling Condenser (VECC) device works by directing the incoming gas particle against themselves in a spherical chamber through numerous nozzles of equal length directed into a small area. The molecules of gaseous working fluid are directed at equal velocity and pressure to each other. This results in the forward velocity becoming rapidly diminished and a high degree of heat being released. The method of this heat release is not discussed here but the under conservation of motion principles, where molecules lose velocity and energy, other surrounding molecules outside the immediate pressure area at the centre of the nozzles will increase in energy. This will increase the number of collisions to the compressor container wall thereby increasing the temperature of the condenser wall which is turn will radiate the heat out. The loss of heat is associated with condensation and change of phase.

In essence the molecules collide into one another at the same velocity in a small space. The angle of collision will determine how much of a molecules forward kinetic motion is cancelled by colliding with another molecule. As the collisions occur in a small space, this area will reach the saturated vapor pressure of the gas quickly and droplets of liquid will form and precipitate out under gravity. The density of the liquid will be higher than the gas and this will cause precipitation. The droplets of liquid are contained in a container at the bottom of the device.

As more gas comes in and collides, the greater the amount of saturated vapor pressure in the collision area and at the sides of the compressor at the wall boundary. The liquid will collect and drain into the collection chamber.

It should be noted that the amount of condensation and the mass flow rate of gas that can be condensed is very high compared to traditional compressors. The greater the input velocity and mass flow rate, the greater the vector cancelling effect and saturation vapor point to create condensation.

The heat removal is assisted by using a heat recovery coil with a heat removing transfer fluid. The heat recovery fluid and heat therein is passed into a heating cycle or generation cycle using a turbine to create electricity.

The major differences in this present invention is the efficiency of this compressor/Condenser is high as there is no mechanical pressure being used to compress the gas and increase the heat and subsequent radiative loss. There is no mechanical compression. The mass flow rate of the device is very high and it can deal with condensing high velocity gases and high flow rates The device compresses and condenses in one device and the lost heat is recovered and utilised in either a heat cycle or via a specialised turbine system.

The device can be used to concentrate air in the upper atmosphere as the incoming air in rapidly concentrated and cooled increasing its density whereupon it can be passed onto rocket combustion cycle as an oxidiser.

The present invention is fully scalable and can be used as a replacement in fridges and freezers or to reduce costs in superconducting machines such as the Large Hadron Collider (LHC) as the majority of the power consumption in these devices arises from keeping magnet cold and this requires liquid helium, the cooling cycle of which results in heat loss and large power consumptions.

This device allows any compressible gas to be condensed with very low parasitic losses compared to typical condensers and as such it can be used with ORC Turbines and Sequential Sublimating Condensing Carbon Dioxide Turbines and all the variants using the same process. Unlike normal compressors and condensers, the heat given off from phase change is utilised as the condenser can act as an energy concentrator allowing it to pressurise gas and push a turbine.

If used in Fusion reactors, the fusion reactors will become energy positive immediately as the vast amount of energy is used in the magnetic containment and supercooling these magnets
The numerical values given for various physical parameters, dimensions, and quantities are only approximate values and it is envisaged that the values higher than the numerical value assigned to the physical parameters, dimensions, and quantities fall within the scope of the invention unless there is a statement in the specification to the contrary.

## Claims

1. A vector cancelling condenser device (100) comprising:
a body (102) defined by at least one wall (104) and an enclosed space (106); at least one pair of delivery tubes (108a, 108b) having a pair of gas outlets (110a, 110b) disposed in the body (102), wherein the pair of gas outlets (110a, 110b) are facing each other in order to, in use, cancel the velocity of a gas coming out from the gas outlets (110a, 110b) and form saturated vapor of the gas;
at least one heat-extracting coil (112) disposed within the body (102) in order to, in use, absorb a latent heat of condensation from the saturated vapors to form condensed liquid; and
a liquid collector (114) fluidically coupled to the body (102) in order to, in use, the condensed liquid.

2. The vector cancelling condenser device (100) as claimed in claim 1, wherein the vector cancelling condenser device (100) further comprises at least one heat extracting jacket provided in the body (102) and the heat extracting jacket is configured to extract the latent heat of condensation released from the condensation of saturated vapors.

3. The vector cancelling condenser device (100) as claimed in claim 1, wherein the shape of the body (102) is selected from sphere, cylinder, cube, cuboid, hexagonal cylinder, polygonal cylinder.

4. A vector cancelling condensing method using the device of claim 1, comprising the steps of:
suppling high pressure gas to a plurality of delivery tubes having a pair of gas outlets (110a, 110b) facing each other;
cancelling the velocity of gas coming out from the gas outlets and converts the gas into saturated vapors;
condensing the saturated vapors partially into condensed liquid;
extracting the latent heat of condensation released from the partial condensation of the saturated vapors into liquid; and
collecting the condensed liquid.

## Patentansprüche

1. Eine vektorausgleichende Kondensatorvorrichtung (100), umfassend:
einen Körper (102), der durch mindestens eine Wand (104) und einen umschlossenen Raum (106) definiert ist; mindestens ein Paar von Zufuhrrohren (108a, 108b) mit einem Paar Gasauslässe (110a, 110b), die in dem Körper (102) angeordnet sind, wobei das Paar Gasauslässe (110a, 110b) einander gegenüberliegen, um im Gebrauch die Geschwindigkeit eines aus den Gasauslässen (110a, 110b) austretenden Gases und des gesättigten Dampfes des Gases zu kompensieren;
mindestens eine Wärmeabfuhrspule (112), die innerhalb des Körpers (102) angeordnet ist, um im Gebrauch die latente Kondensationswärme aus den gesättigten Dämpfen zu absorbieren, um kondensierte Flüssigkeit zu bilden; und
einen Flüssigkeitssammler (114), der fluidisch mit dem Körper (102) verbunden ist, um im Betrieb die kondensierte Flüssigkeit aufzunehmen.

2. Die vektorausgleichende Kondensatorvorrichtung (100) nach Anspruch 1, wobei die vektorausgleichende Kondensatorvorrichtung (100) ferner mindestens eine Wärmeabfuhrschicht umfasst, die n dem Körper (102) vorgesehen ist, und die Wärmeabfuhrschicht so konfiguriert ist, dass sie die latente Kondensationswärme abzieht, die bei der Kondensation gesättigter Dämpfe freigesetzt wird.

3. Die vektorausgleichende Kondensatorvorrichtung (100) nach Anspruch 1, wobei die Form des Körpers (102) aus Kugel, Zylinder, Würfel, Quader, Sechskantzylinder und polygonalem Zylinder ausgewählt ist.

4. Ein vektorausgleichendes Kondensationsverfahren unter Verwendung der Vorrichtung nach Anspruch 1, das die folgenden Schritte umfasst:
Zuführen von Hochdruckgas zu einer Vielzahl von Zufuhrrohren mit einem Paar einander gegenüberliegender Gasauslässe (110a, 110b);
Aufheben der Geschwindigkeit des aus den Gasauslässen austretenden Gases und Umwandeln des Gases in gesättigte Dämpfe;
teilweises Kondensieren der gesättigten Dämpfe zu kondensierter Flüssigkeit;
Extrahieren der latenten Kondensationswärme, die bei der teilweisen Kondensation der gesättigten Dämpfe in Flüssigkeit freigesetzt wird; und
Sammeln der kondensierten Flüssigkeit.

## Revendications

1. Un dispositif condenseur à annulation de vecteur (100) comprenant :
un corps (102) défini par au moins une paroi (104) et un espace clos (106) ; au moins une paire de tubes d'alimentation (108a, 108b) ayant une paire de sorties de gaz (110a, 110b) disposées dans le corps (102), dans lequel la paire de sorties de gaz (110a, 110b) se font face afin de, en utilisation, annuler la vitesse d'un gaz sortant des sorties de gaz (110a, 110b) et de la vapeur saturée du gaz ;
au moins un serpentin d'extraction de chaleur (112) disposé dans le corps (102) afin de, en utilisation, absorber absorber une chaleur latente de condensation des vapeurs saturées pour former un liquide condensé ; et
un collecteur de liquide (114) couplé fluidiquement au corps (102) afin de, en utilisation, le liquide condensé.

2. Le dispositif condenseur à annulation de vecteur (100) selon la revendication 1, dans lequel le dispositif condenseur à annulation de vecteur (100) comprend en outre au moins une chemise d'extraction de chaleur prévue dans le corps (102) et la chemise d'extraction de chaleur est configurée pour extraire la chaleur latente de condensation libérée par la condensation des vapeurs saturées.

3. Le dispositif condenseur à annulation de vecteur (100) selon la revendication 1, dans lequel la forme du corps (102) est choisie parmi sphère, cylindre, cube, parallélépipède rectangle, cylindre hexagonal, cylindre polygonal.

4. Un procédé de condensation à annulation de vecteur utilisant le dispositif de la revendication 1, comprenant les étapes de :
alimentation en gaz haute pression d'une pluralité de tubes d'alimentation ayant une paire de sorties de gaz (110a, 110b) se faisant face ;
annulation de la vitesse du gaz sortant des sorties de gaz et conversion du gaz en vapeurs saturées ;
condensation partielle des vapeurs saturées en liquide condensé ;
extraction de la chaleur latente de condensation libérée par la condensation partielle des vapeurs saturées en liquide ; et
collecte du liquide condensé.
